# EUROPEAN PATENT SPECIFICATION

(11) **EP 1 865 010 B1**
(45) Date of publication and mention of the grant of the patent: **04.04.2012**
(21) Application number: 06714973.2
(22) Date of filing: 01.03.2006
(51) Int. Cl.: C08G 18/62, C08G 18/65

(54) **WATER DISPERSIBLE POLYURETHANE COMPOSITION**
WASSERDISPERGIERBARE POLYURETHANZUSAMMENSETZUNG
COMPOSITION DE POLYURETHANNE DISPERSIBLE DANS L EAU

(30) Priority: 29.03.2005 JP 2005094594
(43) Date of publication of application: 12.12.2007
(73) Proprietor: Adeka Corporation, Tokyo 116-8554 (JP)
(72) Inventor: KASHIWAZAKI, Fumito c/o ADEKA CORPORATION, Saitama, 346-0101 (JP); OKIMOTO, Yoshio c/o ADEKA CORPORATION, Saitama, 346-0101 (JP)
(74) Representative: Forstmeyer, Dietmar
(86) International application number: PCT/JP2006/303855
(87) International publication number: WO 2006/103864

(56) References cited:
- EP-A1- 1 679 349
- JP-A- 10 110 024
- JP-A- 59 113 016
- JP-A- 2000 143 753
- JP-A- 2003 119 241
- Anonymous: "TOE-2000H", KYOWA HAKKO Chemical , December 2003 (2003-12), page 2PP, XP002640125, Retrieved from the Internet: URL:http://www.kyowachemical.co.jp/eng/pdf /TOE-H_ecat.pdf [retrieved on 2011-06-06]
- HORITA I.: 'Shinki na Ryomattan Suisan Kikei Telechelic Oligomer' THE INDUSTRIAL COATING vol. 185, 2003, pages 50 - 53, XP003004016

## Description

### TECHNICAL FIELD

The present invention relates to a water-dispersible polyurethane composition, and more particularly, relates to a water dispersible polyurethane composition wherein a both-end hydroxylated vinyl ether compound is used as a polyol component and which is excellent in adhesiveness, tack characteristics, blocking resistance and the like. The water dispersible polyurethane composition of the present invention is suitable as binders for gravure printing inks or coating agents for plastics.

### BACKGROUND ART

Polyurethane resins are widely used for paint, adhesive, binder, coating agent, and the like since they provide coating films and molded articles with abrasion resistance, adhesiveness, non-stickiness, rubber elasticity, and the like. Recently, a number of water dispersible polyurethane compositions have been reported from the viewpoints of safety such as countermeasure against environmental pollution and occupational hygiene. However, water dispersible polyurethane compositions have a problem that they are inferior in water resistance, heat resistance, tensile property, or other properties compared to solvent-based compositions or solvent-free compositions.

When used as a gravure ink for lamination and a coating agent, the water dispersible polyurethane composition needs excellent adhesiveness to a substrate, tack characteristics and blocking resistance as well as physical properties such as water resistance, heat resistance, and tensile property. However, there is not yet obtained any composition with satisfactory performance.

For example, Patent Document 1 reports an aqueous polyurethane resin obtained by reacting specific hydroxycarboxylic acids, and a binder for printing ink using thereof. In addition, Patent Document 2 reports an aqueous polyurethane resin composition containing a polyester glycol and a polyol having three or more hydroxyl groups as a polyol component and a coating agent for a plastic film using the aqueous polyurethane resin composition.

Patent Document 1: Japanese Patent Laid-Open Publication No. 2004-231813
Patent Document 2: Japanese Patent Laid-Open Publication No. 2002-234931

### DISCLOSURE OF THE INVENTION

### PROBLEMS TO BE SOLVED BY THE INVENTION

Accordingly, an object of the present invention is to provide a water dispersible polyurethane composition that is excellent in adhesiveness, tack characteristics and blocking resistance.

### MEANS FOR SOLVING THE PROBLEMS

The present inventors have found, as a result of the studies, that the above problem can be solved by using a specific polyol compound and have achieved the present invention.

In other words, the present invention provides a water dispersible polyurethane composition containing polyol component (a), polyisocyanate component (b), ionic group-introducing component (c), ionic group neutralizer (d) and water as the essential components, wherein, a both-end hydroxylated vinyl ether compound represented by general formula (I) below is used as the polyol component (a).

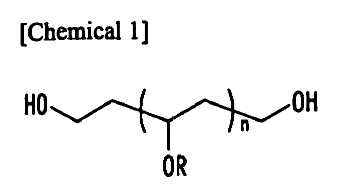

(In the formula, R represents an alkyl group having 1 to 4 carbon atoms and n is a number of 1 to 100.)

### BEST MODE FOR CARRYING OUT THE INVENTION

As the polyol component (a) used for the preparation of the water dispersible polyurethane composition of the present invention, there is used at least a both-end hydroxylated vinyl ether compound represented by general formula (I) above.

In general formula (I), an alkyl group having 1 to 4 carbon atoms represented by R includes methyl, ethyl, propyl, isopropyl, butyl, isobutyl, sec-butyl, tert-butyl and the like. Among these, ethyl group is preferable.

As component (a) mentioned above, there may be used other polyol compounds such as diol compounds and polyol compounds having three or more hydroxyl groups together with the both-end hydroxylated vinyl ether compound represented by general formula (I). The other polyol compounds may be combined and used with the both-end hydroxylated vinyl ether compound making two or three or more kinds in total. When the other polyol compounds are used, the amount of the both-end hydroxylated vinyl ether compound represented by general formula (I) in polyol component (a) to be used is preferably at least 50 mass%.
The above diol compound and the polyol compound having three or more hydroxyl groups include low-molecular-weight polyols, polyetherpolyols, polyesterpolyols, polyesterpolycarbonatepolyols, crystalline or amorphous polycarbonatepolyols, polybutadienepolyols, siliconepolyols, and the like.

The low-molecular-weight polyols include, for example, aliphatic diols such as ethylene glycol, 1,2-propanediol, 1,3-propanediol, 2-methyl-1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol and 1,10-decanediol; alicyclic diols such as cyclohexanedimethanol and cyclohexanediol; trihydric or higher polyols such as trimethylolethane, trimethylolpropane, hexitols, pentitols, glycerin, polyglycerin, pentaerythritol, dipentaerythritol, and tetramethylolpropane.

The polyetherpolyols include, for example, homoadducts of ethylene oxide such as diethylene glycol and triethylene glycol, homoadducts of propylene oxide such as dipropylene glycol and tripropylene glycol, ethylene oxide- and/or propylene oxide-adducts of the low-molecular-weight polyols, polytetramethylene glycol, and the like.

The polyesterpolyols include, for example, a polyesterpolyol obtained by direct esterification and/or ester-exchange reaction of a polyol such as the above low-molecular-weight polyols with a less than stoichiometric quantity of a polycarboxylic acid or an ester-forming derivative (ester, anhydride, halide, and the like) of the polycarboxylic acid and/or a lactone or a hydroxycarboxylic acid obtained by ring-opening hydrolysis of the lactone. The polycarboxylic acid includes, for example, aliphatic dicarboxylic acids such as oxalic acid, malonic acid, succinic acid, glutaric acid, adipic acid, pimeric acid, suberic acid, azelaic acid, sebacic acid, dodecanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3,7-dimethyldecanedioic acid, hydrogenated dimer acid, and dimer acid; aromatic dicarboxylic acids such as phthalic acid, terephthalic acid, isophthalic acid, and naphthalenedicarboxylic acid; alicyclic dicarboxylic acids such as cyclohexanedicarboxylic acid; tricarboxylic acids such as trimellitic acid, trimesic acid, and trimer of castor oil fatty acid; and tetracarboxylic acids such as pyromellitic acid. The ester-forming derivatives of the polycarboxylic acids include anhydrides of the polycarboxylic acids, halides such as chlorides and bromides of the polycarboxylic acids, lower aliphatic esters such as methyl, ethyl, propyl, isopropyl, butyl, isobutyl, and amyl esters of the polycarboxylic acids. The lactones include γ-caprolactone, δ-caprolactone, ε-caprolactone, dimethyl-ε-caprolactone, δ-valerolactone, γ-valerolactone, γ-butyrolactone, and the like.

In the water dispersible polyurethane composition of the present invention, it is preferable to use, as polyol component (a), a both-end hydroxylated vinyl ether compound that is the essential component represented by general formula (I) having a number average molecular weight of 300 to 4000 and optionally other polyol compounds because a water dispersible polyurethane composition having high compatibility is obtained. As the both-end hydroxylated vinyl ether compound represented by general formula (I) having a number average molecular weight of 300 to 4000, there may be used a compound having a value of n in general formula (I) in the range of 20 to 50.

Polyisocyanate component (b) used for the preparation of the water dispersible polyurethane composition of the present invention includes an isocyanate compound such as a diisocyanate compound and a polyisocyanate compound having three or more isocyanate groups in the molecule. These isocyanate compounds can be used alone or in a combination of two or more kinds thereof. However, polyisocyanate component (b) preferably contains diisocyanate and the content of diisocyanate in polyisocyanate component (b) is preferably in the range of 50 to 100 % by weight.

The diisocyanate includes aromatic diisocyanates such as 2,4-tolylene diisocyanate, 2,6-tolylene diisocyanate, diphenylmethane-4,4'-diisocyanate, p-phenylene diisocyanate, xylylene diisocyanate, 1,5-naphthylene diisocyanate, 3,3'-dimethyldiphenyl-4,4'-diisocyanate, dianisidine diisocyanate, and tetramethylxylylene diisocyanate; alicyclic diisocyanates such as isophorone diisocyanate, dicyclohexylmethane-4,4'-diisocyanate, trans-1,4-cyclohexyl diisocyanate, and norbornene diisocyanate; and aliphatic diisocyanates such as 1,6-hexamethylene diisocyanate, 2,2,4-trimethylhexamethylene diisocyanate, 2,4,4-trimethylhexamethylene diisocyanate and lysine diisocyanate. Among these, alicyclic diisocyanates are preferable. In addition, these diisocyanates may be used in a modified form such as a carbodiimide-, isocyanurate-, or biuret-modified form, or may be used in a blocked isocyanate form in which the isocyanate groups are blocked with various blocking agents.

The polyisocyanate compound having three or more isocyanate groups in the molecule includes, for example, isocyanurate trimers, biuret trimers, or trimethylolpropane adducts of diisocyanates listed above; tri- or higher-functional isocyanates such as triphenylmethane triisocyanate, 1-methylbenzene-2,4,6-triisocyanate, dimethyltriphenylmethane tetraisocyanate, and the like. These polyisocyanate compounds may be used in a modified form such as a carbodiimide-, isocyanurate-, or biuret-modified form, or may be used in a blocked isocyanate form in which the isocyanate groups are blocked with various blocking agents.

The ionic group-introducing component (c) used for the preparation of the water dispersible polyurethane composition of the present invention includes an anionic group-introducing compound and a cationic group-introducing compound. The anionic group-introducing compound includes, for example, carboxyl group-containing polyols such as dimethylolpropionic acid, dimethylolbutanoic acid, and dimethylolvaleric acid, and sulfonic acid group-containing polyols such as 1,4-butanediol-2-sulfonic acid. The cationic group-introducing compound includes, for example, N,N-dialkylalkanolamines, N-alkyl-N,N-dialkanolamines such as N-methyl-N,N-diethanolamine and N-butyl-N,N-diethanolamine, trialkanolamines, and the like. Among these, preferably used are polyols containing a carboxylic group and/or polyols containing a sulfonic acid group, and especially preferably used are dimethylolpropionic acid and/or dimethylolbutanoic acid.

When the anionic group-introducing compound is used as component (c), as ionic group neutralizer (d) used for the preparation of the water dispersible polyurethane composition of the present invention, there may be mentioned, for example, tertiary amine compounds including trialkylamines (such as trimethylamine, triethylamine and tributylamine), N,N-dialkylalkanolamines (such as N,N-dimethylethanolamine, N,N-dimethylpropanolamine, N,N-dipropylethanolamine and 1-dimethylamino-2-methyl-2-propanol), N-alkyl-N,N-dialkanolamines, trialkanolamines (such as triethanolamine); and basic compounds such as ammonia, trimethylammonium hydroxide, sodium hydroxide, potassium hydroxide, and lithium hydroxide. When the cationic group-introducing compound is used as component (c), the ionic group neutralizer (d) includes organic carboxylic acids such as formic acid, acetic acid, lactic acid, succinic acid, glutaric acid, and citric acid; organic sulfonic acids such as p-toluenesulfonic acid and alkylsulfonic acids; inorganic acids such as hydrochloric acid, phosphoric acid, nitric acid, and sulfuric acid; epoxy compounds such as epihalohydrin, agents for forming quaternary ammonium such as dialkyl sulfates and alkyl halides.

A chain extender component may be used for the preparation of the water dispersible polyurethane composition of the present invention, where necessary. As the chain extender component, for example, a diamine compound may be used alone or in a combination of two or more kinds thereof. The diamine compound includes low-molecular-weight diamines (for example, ethylenediamine and propylenediamine) with a structure in which alcoholic hydroxyl groups of aliphatic diols or alicyclic diols of the above low-molecular-weight polyols used as component (a) are substituted with amino groups; polyetherdiamines such as polyoxypropylenediamine and polyoxyethylenediamine; alicyclic diamines such as menthenediamine, isophoronediamine, norbornenediamine, bis(4-amino-3-methyldicyclohexyl)methane, diaminodicyclohexylmethane, bis(amino-methyl)cyclohexane, and 3,9-bis(3-aminopropyl)-2,4,8,10-tetraoxaspiro[5.5]undecane; aromatic diamines such as m-xylenediamine, α-(m/p-aminophenyl)ethylamine, m-phenylenediamine, diaminodiphenylmethane, diaminodiphenyl sulfone, diaminodiethyldimethyldiphenylmethane, diaminodiethyldiphenylmethane, dimethylthiotoluenediamine, diethyltoluenediamine, and α,α'-bis(4-aminophenyl)-p-diisopropylbenzene; hydrazine; dicarboxylic acid dihydrazide compounds which are compounds obtained useing hydrazine and dicarboxylic acids exemplified as a polycarboxylic acid used for polyesterpolyols that may be used as component (a) described above; and the like.

Reaction terminating agents may be used for the preparation of the water dispersible polyurethane composition of the present invention, where necessary. The reaction terminating agents includes alcohol compounds, monoamine compounds and the like, and may be used alone or in a combination of two or more kinds. The alcohol compounds include methanol, ethanol, propanol, isopropanol, butanol, isobutanol, amyl alcohol, hexanol, octanol and the like. The monoamine compounds include alkyl amines such as ethylamine, propylamine, 2-propylamine, butylamine, 2-butylamine, tert-butylamine and isobutylamine; aromatic amines such as aniline, methylaniline, phenylnaphthylamine and naphthylamine; alicyclic amines such as cyclohexaneamine and methylcyclohexaneamine; ether amines such as 2-methoxyethylamine, 3-methoxypropylamine and 2-(2-methoxyethoxy)ethylamine; alkanolamines such as ethanolamine, propanolamine, butylethanolamine, 1-amino-2-methyl-2-propanol, 2-amino-2-methylpropanol, diethanolamine, diisopropanolamine, dimethylaminopropylethanolamine, dipropanolamine, N-methylethanolamine and N-ethylethanolamine; and the like.

The method for producing the water dispersible polyurethane composition of the present invention is not particularly limited. There may be employed any common methods for producing water dispersible polyurethane compositions. A preferable method for producing the composition of the present invention includes a prepolymer mixing method in which a prepolymer is synthesized by reacting polyol component (a), polyisocyanate component (b), ionic group-introducing component (c) and ionic group neutralizer (d) in a solvent and then the resulting prepolymer is fed to water to be dispersed.

The solvent used for the preferred method for producing the composition includes, for example, alcohols such as methanol, ethanol, propanol, isopropanol, butanol, sec-butanol, tert-butanol, hexanol and 2-methyl-1-pentanol; ketones such as acetone, methylethylketone, methylisobutylketone, 2-pentanone, 2-hexanone, cyclohexanone and acetophenone; aliphatic hydrocarbons such as hexane, 2-methylpentane, heptane and octane; alicyclic hydrocarbons such as cyclopentane, methylcyclopentane, cyclohexane, methylcyclohexane and ethylcyclohexane; aromatic hydrocarbons such as benzene, xylene, toluene and ethylbenzene; ethers such as diethyl ether, dibutyl ether, dioxane, tetrahydrofuran, methylcellosolve and ethylcellosolve; esters such as ethyl acetate, propyl acetate, butyl acetate, methyl propionate and propylene glycol monomethylether acetate; amides such as N-methylpyrrolidone and dimethylformamide; sulfoxides such as dimethylsulfoxide; and the like. These solvents may be mixed for use. Among these solvents, preferably used are methylethylketone, N-methylpyrrolidone, propylene glycol monomethylether acetate and tert-butanol. In addition, these solvents are typically used in the amount of 3 to 100 mass% relative to the total amount of raw materials constituting polyurethane used for the production of water dispersible polyurethane compositions.

Further, in the water dispersible polyurethane composition of the present invention, the ratio of polyol component (a) and polyisocyanate component (b) used is preferably in the range so that the isocyanate group of polyisocyanate component (b) is 1.2 to 2.0 mol relative to 1 mol of an active hydrogen-containing group such as the hydroxyl group derived from polyol component (a).

The amount of ionic group-introducing component (c) to be used is preferably 5 to 1000 mol and more preferably 10 to 500 mol relative to 100 mol of polyols present in polyol component (a). If the amount is less than 5 mol, the dispersion stability is likely to be reduced when dispersed in water, while if it is more than 1000 mol, the water resistance of coating films and the like obtained from the water-dispersible polyurethane resin composition is likely to be deteriorated.

The amount of ionic group neutralizer (d) to be used may be in the range so that the neutralizer reacts with ionic groups introduced into polyurethane by ionic group-introducing component (c) to form a salt and thus imparts water dispersibility. The neutralization ratio is preferably 50 to 100% and especially preferably 75 to 100%. In addition, the amount of ionic group neutralizer (d) to be used is preferably at a ratio of 0.2 to 2.0 mol and more preferably at a ratio of 0.5 to 1.5 mol relative to 1 mol of the ionic group, because substantial excess or deficiency of neutralizer (d) is likely to deteriorate physical properties such as water resistance, strength, and stretching property of coating films and the like obtained from the water-dispersible polyurethane composition.

In addition, the ratio of components (a) to (d) to be used is preferably selected from 10 to 200 parts by mass of component (b), 1 to 50 parts by mass of component (c) and 1 to 50 parts by mass of component (d) relative to 100 parts by mass of component (a) on a mass basis so as to satisfy the above molar ratio, respectively.

Further, the amount of water to be used is selected such that the solid content in the water dispersible polyurethane composition is preferably 10 to 80 parts by weight, and more preferably selected from 30 to 500 parts by weight relative to 100 parts by weight of polyurethane obtained using components (a) to (d) so as to satisfy the above solid content.

Furthermore, in the water dispersible polyurethane composition of the present invention, the urethane bond concentration and average molecular weight (number average molecular weight) of polyurethane contained are determined appropriately depending on the applications and the like and are not particularly limited. However, the urethane bond concentration is preferably 0.5 to 2.0 eq/kg and the average molecular weight is preferably 1500 to 5000.

Also, in the water dispersible polyurethane composition of the present invention, when polyurethane is dispersed in water, there may be used a common crosslinking agent that forms a crosslinking structure in the polyurethane molecule, where necessary. Preferable crosslinking agents for the water-dispersible polyurethane composition of the present invention include melamine, monomethylolmelamine, dimethylolmelamine, trimethylolmelamine, tetramethylolmelamine, pentamethylolmelamine, hexamethylolmelamine, methylated methylolmelamine, butylated methylolmelamine, melamine resin, and the like.

Further, in the water-dispersible polyurethane composition of the present invention, when polyurethane is dispersed in water, there may be used a common emulsifier used in water-dispersible polyurethane compositions, where necessary. Such emulsifiers include anionic surfactants, nonionic surfactants, cationic surfactants, amphoteric surfactants, polymer surfactants, reactive surfactants, and the like. Among these, preferable are anionic surfactants and nonionic surfactants because of low cost and good emulsifying effects.

The anionic surfactants include alkyl sulfates such as sodium dodecyl sulfate, potassium dodecyl sulfate, and ammonium dodecyl sulfate; salts of polyoxyethylene ether sulfates such as sodium dodecylpolyglycol ether sulfate and ammonium polyoxyethylene alkyl ether sulfate; sodium sulforicinoleate; alkyl sulfonates such as alkali metal salts of sulfonated paraffin and ammonium salt of sulfonated paraffin; fatty acid salts such as sodium laurate, triethanolamine oleate, and triethanolamine abietate; sodium benzenesulfonate; alkylarylsulfonates such as alkali metal sulfate of alkaliphenolhydroxyethylene; higher alkylnaphthalenesulfonate salts; naphthalenesulfonic acid/formalin condensate; salts of dialkyl sulfosuccinate; salts of polyoxyethylene alkyl sulfate, salts of polyoxyethylenealkylaryl sulfate; salts of polyoxyethylene ether phosphate; polyoxyethylene alkyl ether acetates; salts of N-acylamino acid; salts of N-acylmethyltaurine; and the like.

The nonionic surfactants include fatty acid partial esters of polyhydric alcohols such as sorbitan monolaurate and sorbitan monooleate; polyoxyethylene glycol fatty acid esters; polyglycerin fatty acid esters; ethylene oxide- and/or propylene oxide-adducts of C₁₋₁₈ alcohol; ethylene oxide- and/or propylene oxide-adducts of alkylphenol; ethylene oxide- and/or propylene oxide-adducts of alkylene glycol and/or alkylenediamine, and the like.

The C₁₋₁₈ alcohols that may compose the nonionic surfactants include methanol, ethanol, propanol, 2-propanol, butanol, 2-butanol, t-butanol, amyl alcohol, isoamyl alcohol, t-amyl alcohol, hexanol, octanol, decanol, lauryl alcohol, myristyl alcohol, palmityl alcohol, stearyl alcohol, and the like. The alkylphenols that may compose the nonionic surfactants include phenol, methylphenol, 2,4-di-t-butylphenol, 2,5-di-t-butylphenol, 3,5-di-t-butylphenol, 4-(1,3-tetramethylbutyl)phenol, 4-isooctylphenol, 4-nonylphenol, 4-t-octylphenol, 4-dodecylphenol, 2-(3,5-dimethylheptyl)phenol, 4-(3,5-dimethylheptyl)phenol, naphthol, bisphenol A, bisphenol F, bisphenol Z, and the like. The alkylene glycol that may compose the nonionic surfactants include ethylene glycol, 1,2-propanediol, 1,3-propanediol, 2-methyl-1,3-propanediol, 2-butyl-2-ethyl-1,3-propanediol, 1,4-butanediol, neopentyl glycol, 1,5-pentanediol, 3-methyl-1,5-pentanediol, 2,4-diethyl-1,5-pentanediol, 1,6-hexanediol, and the like. The alkylenediamines that may compose the nonionic surfactants include alkylenediamine with a structure in which alcoholic hydroxyl groups in the above alkylene glycols are replaced by amino groups. The ethylene oxide-adducts and propylene oxide-adducts may be either random adducts or block adducts.

When the emulsifiers are used, the amount may be arbitrarily selected without limitation. It is preferably 0.01 to 0.3 parts by mass, and more preferably 0.05 to 0.2 parts by mass, relative to 1 part by mass of the polyurethane. If the amount is smaller than 0.01 parts by mass, dispersibility is sometimes insufficient, whereas if it exceeds 0.3 parts by mass, coating films or the like obtained from the water-dispersible polyurethane composition may be inferior in the physical properties such as strength.

Further, the water-dispersible polyurethane resin composition of the present invention may contain various common additives, where necessary. The additives include, for example, film-forming auxiliaries; hardeners; antiblocking agents; viscosity modifiers; leveling agents; antifoaming agents; anti-gelatinization agents; light stabilizers such as hindered amines; antioxidants including phenol-type antioxidants, phosphorous-containing antioxidants, sulfur-containing antioxidants, and the like; ultraviolet absorbers including triazines, benzoates, 2-(2-hydroxyphenyl)benzotriazoles, and the like; radical scavengers; heat-resistance improvers; inorganic and organic fillers; plasticizers; lubricants; reinforcers; catalysts; thixotropic agents; antimicrobial agents; antifungal agents; rust preventives; anticorrosion agents; pigments; dyes; antistatic agents; fire retardants; and the like. There may be also used silane coupling agents, epoxy resins, acrylic resins, colloidal silica, tetraalkoxysilane or its polycondensate, chelating agents, epoxy compounds, and the like, which provide the composition with particularly strong adhesiveness to substrates. The amount of these additives to be used may be selected appropriately depending on the purpose of using them, but is preferably 300 parts by mass or less in total based on 100 parts by mass of the polyurethane obtained by using components (a) to (d).

Applications of the water-dispersible polyurethane composition of the present invention include paint, an adhesive, a surface modifier, a binder for organic powder and/or inorganic powder, a molded article, a building material, a sealant, a cast molding material, an elsatomer, a foam, a plastic raw material, a treating agent for fiber and the like; specifically, a binder for glass fiber, a coating agent for plastics such as polyethylene, polypropylene, polyester and polycarbonate, an adhesive for laminate, a coating agent for agricultural films, a coating agent for thermal paper, a coating agent for inkjet paper, a binder for gravure printing ink, paint for steel plates, paint for inorganic construction material such as glass, slate, and concrete, paint for wood, a treating agent for fiber, a coating agent for fiber, a coating agent for electronic parts materials, sponge, puff, gloves, condom, and the like. Among these applications, the water-dispersible polyurethane composition of the present invention may be especially suitably used as a binder for gravure printing ink and a coating agent for plastics.

### EXAMPLES

Hereinafter, the water-dispersible polyurethane composition of the present invention is described in more detail with reference to Examples, Comparative Examples and Evaluation Examples. However, the present invention is not limited by the following Examples and the like.
The both-end hydroxylated vinyl ether compound used in the following Examples is an oligomer having a structure represented by general formula (I) in which R in general formula (I) is ethyl group. The oligomer has an average molecular weight of 2000 and a hydroxyl group value of 74 mgKOH/g. Further, in the following Examples and the like, all the solid contents are based on mass and the average molecular weight is the number average molecular weight.

### [Example 1] Production of water dispersible polyurethane composition No. 1

To a reaction flask were charged 0.87 mol of the both-end hydroxylated vinyl ether compound and 2.00 mol of isophorone diisocyanate and the reaction was conducted under nitrogen gas stream at 95 to 105°C for 2 hours and then the reaction mixture was cooled to 40°C. To the reaction mixture were added 100 g of methylethylketone, 0.49 mol of dimethylolbutanoic acid and 0.24 mol of triethylamine and the resultant mixture was stirred under nitrogen gas stream at 60 to 70°C for 2 hours to obtain a prepolymer composition. The prepolymer was added to 550 g of an ion exchanged water in which 0.2 mol of SE-21 (silicone-type antifoaming agent, manufactured by Wacker Silicone Co., Ltd.) was dissolved and then the resultant mixture was stirred at room temperature for 30 minutes. Subsequently, to the mixture was added 0.22 mol of ethylenediamine diluted with 80 g of water and the resultant mixture was stirred at room temperature for 30 minutes to obtain a target product, water dispersible polyurethane composition No. 1.
The water dispersible polyurethane composition No. 1 obtained had a urethane bond concentration of 1.49 eq/kg, an average molecular weight of 2800 and a solid content of 43.5 %.

### [Example 2] Production of water dispersible polyurethane composition No. 2

To a reaction flask were charged 0.87 mol of the both-end hydroxylated vinyl ether compound and 2.00 mol of isophorone diisocyanate and the reaction was conducted under nitrogen gas stream at 95 to 105°C for 2 hours and then the reaction mixture was cooled to 40°C. To the reaction mixture were added 100 g of N-methylpyrrolidone, 0.49 mol of dimethylolbutanoic acid and 0.24 mol of triethylamine, and the resultant mixture was stirred under nitrogen gas stream at 60 to 70°C for 2 hours to obtain a prepolymer composition. The prepolymer composition obtained was added to 550 g of an ion exchanged water in which 0.2 mol of SE-21 was dissolved and then the resultant mixture was stirred at room temperature for 30 minutes. Subsequently, to the mixture was added 0.22 mol of ethylenediamine diluted with 80 g of water and the resultant mixture was stirred at room temperature for 30 minutes to obtain a target product, water dispersible polyurethane composition No. 2.
The water dispersible polyurethane composition No. 2 obtained had a urethane bond concentration of 1.49 eq/kg, an average molecular weight of 2800 and a solid content of 43.5 %.

### [Example 3] Production of water dispersible polyurethane composition No. 3

To a reaction flask were charged 0.87 mol of the both-end hydroxylated vinyl ether compound and 2.00 mol of isophorone diisocyanate and the reaction was conducted under nitrogen gas stream at 95 to 105°C for 2 hours and then the reaction mixture was cooled to 40°C. To the reaction mixture were added 100 g of propyleneglycol monomethylether acetate, 0.49 mol of dimethylolbutanoic acid and 0.24 mol of triethylamine and the resultant mixture was stirred under nitrogen gas stream at 60 to 70°C for 2 hours to obtain a prepolymer composition. The resultant prepolymer composition was added to 550 g of an ion exchanged water in which 0.2 mol of SE-21 was dissolved and then the resultant mixture was stirred at room temperature for 30 minutes. Subsequently, to the mixture was added 0.22 mol of ethylenediamine diluted with 80 g of water and the resultant mixture was stirred at room temperature for 30 minutes to obtain a target product, water dispersible polyurethane composition No. 3.
The water dispersible polyurethane composition No. 3 obtained had a urethane bond concentration of 1.49 eq/kg, an average molecular weight of 2800 and a solid content of 43.5 %.

### [Example 4] Production of water dispersible polyurethane composition No. 4

To a reaction flask were charged 0.87 mol of the both-end hydroxylated vinyl ether compound and 2.00 mol of isophorone diisocyanate and the reaction was conducted under nitrogen gas stream at 95 to 105°C for 2 hours and then the reaction mixture was cooled to 40°C. To the reaction mixture were added 100 g of t-butanol, 0.49 mol of dimethylolbutanoic acid and 0.22 mol of triethylamine and the resultant mixture was stirred under nitrogen gas stream at 60 to 70°C for 2 hours to obtain a prepolymer composition. The resultant prepolymer was added to 550 g of an ion exchanged water in which 0.2 mol of SE-21 was dissolved and then the resultant mixture was stirred at room temperature for 30 minutes. Subsequently, to the mixture was added 0.22 mol of ethylenediamine diluted with 80 g of water and the resultant mixture was stirred at room temperature for 30 minutes to obtain a target product, water dispersible polyurethane composition No. 4.
The water dispersible polyurethane composition No. 4 obtained had a urethane bond concentration of 1.49 eq/kg, an average molecular weight of 2800 and a solid content of 39.2 %.

### [Comparative Example 1] Production of water dispersible polyurethane composition No. 5

A water dispersible polyurethane composition No. 5 was obtained by using the same blending ratio and the same process as those of Example 2 except that a polyesterpolyol having a number average molecular weight of 2000 obtained from 3-methyl-1,5-pentanediol and adipic acid was used in place of the both-end hydroxylated vinyl ether compound.
The water dispersible polyurethane composition No. 5 obtained had a urethane bond concentration of 1.28 eq/kg, an average molecular weight of 2850 and a solid content of 43.5 %.

### [Comparative Example 2] Production of water dispersible polyurethane composition No. 6

A water dispersible polyurethane composition No. 6 was obtained by using the same blending ratio and the same process as those of Example 4 except that a polyesterpolyol having a number average molecular weight of 2000 obtained from 3-methyl-1,5-pentanediol and adipic acid was used in place of the both-end hydroxylated vinyl ether compound.
The water dispersible polyurethane composition No. 6 obtained had a urethane bond concentration of 1.28 eq/kg, an average molecular weight of 2850 and a solid content of 39.7%.

### [Evaluation Example 1] Evaluation of water dispersible polyurethane compositions

The water dispersible polyurethane compositions No. 1 to No. 6 obtained in Examples 1 to 4 and Comparative Examples 1 to 2 were evaluated for adhesiveness, tack characteristics and blocking resistance under the following conditions. The results are shown in Table 1.

### <Adhesiveness>

Each water dispersible polyurethane composition was applied on a stretched polypropylene film subjected to corona discharge treatment by using a bar coater and the coated film was heated at 50°C for 30 minutes to obtain a test specimen with an ink surface composed of a polyurethane composition. The bending processing was performed at 180°C with the ink surface of the test specimen directing outward. A cellophane tape of 18 mm in width was attached onto the ink surface of the bending processed portion of the specimen and then forcibly peeled off to observe the adhesiveness of the ink. The evaluation was made in five grades, wherein five points were given to the specimen in which no abnormality occurred at the ink surface and one point was given to the specimen in which the ink surface was completely peeled off.

### <Tack Characteristics>

Each water dispersible polyurethane composition was applied on a stretched polypropylene film subjected to corona discharge treatment by using a bar coater. After drying the composition at 25°C for 24 hours, the drying state of the coated surface was observed with finger touch. The evaluation was made in five grades wherein five points were given to the specimen in which no fingerprints remained on the coated surface and one point was given to the specimen in which the water dispersible composition adhered to the finger.

### <Blocking Resistance>

Each water dispersible polyurethane composition was applied on a stretched polypropylene film subjected to corona discharge treatment by using a bar coater. After drying the composition by heating at 50°C for 30 minutes, the coated surfaces were adhered to each other and a load of 0.5 kg/cm² was applied thereon while keeping this state at 40°C. After 24 hours have elapsed from the beginning of the above state, the blocking state of the portion in which the coated surfaces were adhered was observed. The evaluation was made by the following rating: good: no blocking was observed, intermediate: slight blocking was observed, and poor: blocking was observed.

**[Table 1]**

| Water dispersible polyurethane composition | Adhesiveness | Tack characteristics | Blocking resistance |
|---|---|---|---|
| No. 1 (Example 1) | 3 | 3 | good |
| No. 2 (Example 2) | 4 | 3 | intermediate |
| No. 3 (Example 3) | 3 | 3 | good |
| No. 4 (Example 4) | 5 | 3 | good |
| No. 5 (Comparative Example 1) | 3 | 3 | poor |
| No. 6 (Comparative Example 2) | 2 | 2 | poor |

From the results of Table 1, the water dispersible polyurethane composition of the present invention was confirmed to be excellent in adhesiveness, blocking resistance and drying property.

### INDUSTRIAL APPLICABILITY

A water dispersible polyurethane composition of the present invention is excellent in adhesiveness, tack characteristics and blocking resistance.

## Claims

1. A water dispersible polyurethane composition obtainable from polyol component (a), polyisocyanate component (b), ionic group-introducing component (c), ionic group neutralizer (d) and water as essential components, wherein a both-end hydroxylated vinyl ether compound represented by general formula (I) is used as polyol component (a). 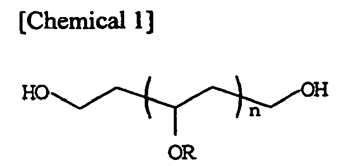 in the formula, R represents an alkyl group having 1 to 4 carbon atoms and n is a number of 1 to 100.

2. The water-dispersible polyurethane composition according to claim 1, wherein R in general formula (I) above is an ethyl group.

3. The water-dispersible polyurethane composition according to claim 1 or 2, wherein said polyisocyanate component (b) contains a diisocyanate component and said diisocyanate component is an alicyclic diisocyanate.

4. The water-dispersible polyurethane composition according to any of claims 1 to 3, wherein the ionic group in said ionic group-introducing component (c) is a carboxyl group or a sulfonic acid group.

5. A method for producing the water-dispersible polyurethane composition according to any of claims 1 to 4, wherein a prepolymer is synthesized by reacting polyol component (a), polyisocyanate component (b), ionic group-introducing component (c) and ionic group neutralizer (d) and then the prepolymer is fed to water to be dispersed.

6. Composition for the preparation of a water dispersible polyurethane composition, comprising polyol component (a), polyisocyanate component (b), ionic group-introducing component (c), ionic group neutralizer (d) and water as essential components, wherein a both-end hydroxylated vinyl ether compound represented by general formula (I) is used as polyol component (a): 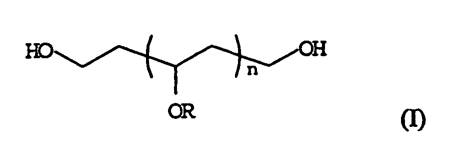 wherein R represents an alkyl group having 1 to 4 carbon atoms and n is a number of 1 to 100.

7. The composition according to claim 6, wherein R in general formula (I) is an ethyl group.

8. The composition according to claim 6 or 7, wherein said polyisocyanate component (b) contains a diisocyanate component and said diisocyanate component is an alicyclic diisocyanate.

9. The composition according to any of claims 6 to 8, wherein the ionic group in said ionic group-introducing component (c) is a carboxyl group or a sulfonic acid group.

## Patentansprüche

1. Wasserdispergierbare Polyurethanzusammensetzung, erhältlich aus einer Polyolkomponente (a), einer Polyisocyanatkomponente (b), einer Komponente (c), die eine ionische Gruppe einführt, einem Ionengruppe-Neutralisator (d) und Wasser als wesentliche Komponenten, wobei eine an beiden Enden hydroxylierte Vinyletherverbindung, dargestellt durch die allgemeine Formel (I), als Polyolkomponente (a) verwendet wird: 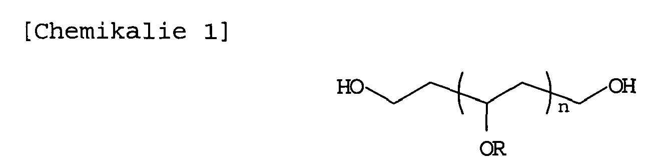 in der Formel stellt R eine Alkylgruppe mit 1 bis 4 Kohlenstoffatomen dar und n ist eine Zahl von 1 bis 100.

2. Die wasserdispergierbare Polyurethanzusammensetzung nach Anspruch 1, wobei R in der vorstehenden allgemeinen Formel (I) eine Ethylgruppe ist.

3. Die wasserdispergierbare Polyurethanzusammensetzung nach Anspruch 1 oder 2, wobei die Polyisocyanatkomponente (b) eine Diisocyanatkomponente enthält und diese Diisocyanatkomponente ein alicyclisches Diisocyanat ist.

4. Die wasserdispergierbare Polyurethanzusammensetzung nach einem der Ansprüche 1 bis 3, wobei die ionische Gruppe in der Komponente (c), die eine ionische Gruppe einführt, eine Carboxylgruppe oder eine Sulfonsäuregruppe ist.

5. Verfahren zur Herstellung der wasserdispergierbaren Polyurethanzusammensetzung nach einem der Ansprüche 1 bis 4, wobei ein Prepolymer synthetisiert wird, indem Polyolkomponente (a), Polyisocyanatkomponente (b), Komponente (c), die eine ionische Gruppe einführt, und Ionengruppe-Neutralisator (d) umgesetzt werden und dann das Prepolymer Wasser zugeführt wird, um dispergiert zu werden.

6. Zusammensetzung zur Herstellung einer wasserdispergierbaren Polyurethanzusammensetzung, umfassend eine Polyolkomponente (a), eine Polyisocyanatkomponente (b), eine Komponente (c), die eine ionische Gruppe einführt, einen Ionengruppe-Neutralisator (d) und Wasser als wesentliche Komponenten, wobei eine an beiden Enden hydroxylierte Vinyletherverbindung, dargestellt durch die allgemeine Formel (I), als Polyolkomponente (a) verwendet wird: 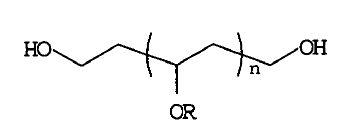 wobei R eine Alkylgruppe mit 1 bis 4 Kohlenstoffatomen darstellt und n eine Zahl von 1 bis 100 ist.

7. Die Zusammensetzung nach Anspruch 6, wobei R in der allgemeinen Formel (I) eine Ethylgruppe ist.

8. Die Zusammensetzung nach Anspruch 6 oder 7, wobei die Polyisocyanatkomponente (b) eine Diisocyanatkomponente enthält und diese Diisocyanatkomponente ein alicyclisches Diisocyanat ist.

9. Die Zusammensetzung nach einem der Ansprüche 6 bis 8, wobei die ionische Gruppe in der Komponente (c), die eine ionische Gruppe einführt, eine Carboxylgruppe oder eine Sulfonsäuregruppe ist.

## Revendications

1. Composition de polyuréthane dispersible dans l'eau pouvant être obtenue à partir d'un composant polyol (a), d'un composant polyisocyanate (b), d'un composant (c) d'introduction d'un groupe ionique, d'un agent de neutralisation (d) du groupe ionique et d'eau comme composants essentiels, dans laquelle un composé d'éther de vinyle hydroxylé aux deux extrémités représenté par la formule générale (I) est utilisé comme composant polyol (a). 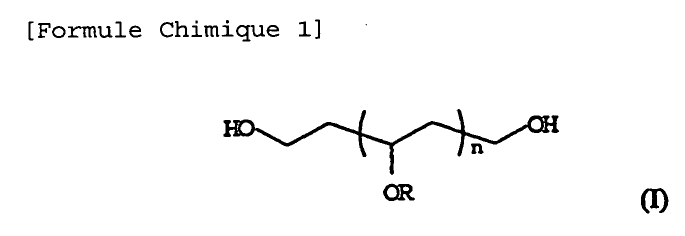 dans la formule, R représente un groupe alkyle ayant 1 à 4 atomes de carbone et n est un nombre de 1 à 100.

2. Composition de polyuréthane dispersible dans l'eau selon la revendication 1, dans laquelle R dans la formule générale (I) ci-dessus est un groupe éthyle.

3. Composition de polyuréthane dispersible dans l'eau selon la revendication 1 ou 2, dans laquelle ledit composant polyisocyanate (b) contient un composant diisocyanate et ledit composant diisocyanate est un diisocyanate alicyclique.

4. Composition de polyuréthane dispersible dans l'eau selon l'une des revendications 1 à 3, dans laquelle le groupe ionique dans ledit composant (c) d'introduction d'un groupe ionique est un groupe carboxyle ou un groupe acide sulfonique.

5. Procédé de production d'une composition de polyuréthane dispersible dans l'eau selon l'une des revendications 1 à 4, dans lequel un prépolymère est synthétisé en faisant réagir un composant polyol (a), un composant polyisocyanate (b), un composant (c) d'introduction d'un groupe ionique et un agent de neutralisation (d) du groupe ionique et ensuite le prépolymère est ajouté à l'eau pour être dispersé.

6. Composition pour la préparation d'une composition de polyuréthane dispersible dans l'eau, comprenant un composant polyol (a), un composant polyisocyanate (b), un composant (c) d'introduction d'un groupe ionique, un agent de neutralisation (d) du groupe ionique et l'eau comme composants essentiels, dans laquelle un composé d'éther de vinyle hydroxylé aux deux extrémités représenté par la formule générale (I) est utilisé comme composant polyol (a): 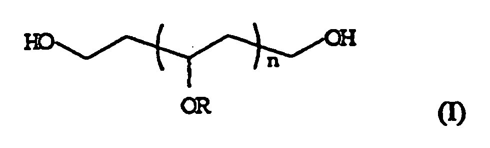 où R représente un groupe alkyle ayant 1 à 4 atomes de carbone et n est un nombre de 1 à 100.

7. Composition selon la revendication 6, dans laquelle R dans la formule générale (I) est un groupe éthyle.

8. composition selon la revendication 6 ou 7, dans laquelle ledit composant polyisocyanate (b) contient un composant diisocyanate et ledit composant diisocyanate est un diisocyanate alicyclique.

9. Composition selon l'une des revendications 6 à 8, dans laquelle le groupe ionique dans ledit composant (c) d'introduction d'un groupe ionique est un groupe carboxyle ou un groupe acide sulfonique.
